# EUROPEAN PATENT SPECIFICATION

(11) **EP 3 001 760 B1**
(45) Date of publication and mention of the grant of the patent: **22.01.2020**
(21) Application number: 14306495.4
(22) Date of filing: 26.09.2014
(51) Int. Cl.: H04W 76/14, H04W 72/12

(54) **ALLOCATING UPLINK RESOURCES TO USER EQUIPMENT FOR CELLULAR AND DIRECT COMMUNICATIONS**
ZUWEISUNG VON UPLINK-RESSOURCEN AN EIN BENUTZERGERÄT ZUR ZELLULAREN UND DIREKTEN KOMMUNIKATIONEN
ATTRIBUTION DE RESSOURCES DE LIAISON MONTANTE À UN ÉQUIPEMENT UTILISATEUR POUR COMMUNICATIONS DIRECTES ET CELLULAIRES

(43) Date of publication of application: 30.03.2016
(73) Proprietor: Alcatel Lucent, 91620 Nozay (FR)
(72) Inventor: Worrall, Chandrika, Swindon, Wiltshire SN5 7DJ (GB); Lim, Seau Sian, Swindon, Wiltshire SN5 7DJ (GB)
(74) Representative: Mills, Julia

(56) References cited:
- WO-A1-2014/069223
- US-A1- 2013 322 413

## Description

### FIELD OF THE INVENTION

The present invention relates to a method, computer program, user equipment and network node for facilitating communication between user equipment.

### BACKGROUND

Wireless telecommunication systems are known. In such systems network connectable devices or mobile communication devices such as user equipment, mobile telephones and similar are typically operable to communicate with base stations provided by network providers.

In known wireless telecommunication systems, radio coverage is provided to network connectable devices within areas known as cells. Abase station is located in each cell to provide radio coverage. Typically, network connectable devices in each cell are operable to receive information and data from a base station and to transmit information and data to a base station. This information or data can then be transmitted to further network nodes within the wireless communication network, allowing network connectable devices in different cells to communicate with each other as they roam through the wireless communication system. A number of base stations are provided and are distributed geographically in order to provide a wide area of coverage to network connectable devices.

In some situations it maybe desirable for user equipment (UE) that are located in proximity to each other to transmit information directly to each other rather than via the network nodes of a wireless communication network. For such direct device-to-device communication the channel used for this communication (comprising time - frequency resource over which a signal is to be transmitted) should, where possible, be allocated to a device transmitting the signal in a way that avoids or at least reduces signal collision.

There are two ways of doing this, one is under the control of the wireless communication system where a network node will allocate the resource and the other under control of the user equipment where it will select a resource from a pool of resources reserved for such communications. The former clearly has advantages of reduced collisions as it is under central control but it will only be applicable where the user equipment is within coverage of a network cell. Currently the network is responsible for allocating resources for cellular communications, that is communications between network connectable devices made via the network. It would be desirable to be able to allocate resources for both direct and cellular communications between user equipment in an efficient way that reduces collisions.

US2013/ 322413 discloses a way of requesting resource for D2D transmission from a network node, receiving the resource and using it for the transmission. The network node may signal resource allocation or scheduling assignments for different transmissions and the UE may differentiate and identify the purpose of the scheduling assignments and select those targeted to a D2D transmission. The UE may also request resource for a D2D transmission and may identify the resource provided and use it for the transmission.

WO2014/069223 discloses a system where the user equipment perform D2D communication under the control of a base station. The user transmits a D2D buffer status report indicating an amount of non-transmitted D2D data and a cellular communication buffer status report indicating an amount of non-transmitted cellular communication. This allows the base station to determine the amount of non-transmitted data pending for a D2D communication and a cellular communication to allocate resources accordingly.

### SUMMARY

A first aspect of the present invention provides a method performed at a user equipment of requesting uplink resource from a network node within a wireless communication network, for transmitting uplink data, comprising:
transmitting a scheduling request;
generating a status report said status report providing an indication of an amount of said uplink data and whether said uplink data is to be transmitted as a cellular communication to at least one other user equipment transmitted via at least one network node or whether said uplink data is to be transmitted as a direct communication directly to at least one other user equipment;
in response to receiving from said network node (20) a resource grant granting a resource to said user equipment for transmitting said status report, transmitting said status report within said granted resource; wherein
when said uplink data is to be transmitted as said direct communication said status report comprises an indication of a priority of said direct communication.

In cases where the use of uplink resources by user equipment is controlled by the network for both cellular communications and direct communications, it is advantageous if the network is aware of the type of communication that it is allocating resources for, prior to allocating them. In this regard cellular communications are those transmitted between user equipment via the wireless communication network and direct communications, are those transmitted directly between devices in scenarios such as public service communications. Conventionally in cellular communications a user equipment requiring an uplink resource will transmit a scheduling request on a dedicated resource and in response to a resource grant will transmit a status report on this resource indicating an amount of uplink data awaiting transmission and the network node can then allocate suitable resource for the communication of this uplink data. If the network is to allocate resources for both direct and cellular communications it may be advantageous to use a similar resource granting process, however, as direct communications need resource as a matter of urgency then it is important that the network node can differentiate between the two types of communication that the resource is requested for. Given that scheduling requests are transmitted as a first transmission, then it may seem that identifying the communication at this stage maybe advantageous. However, scheduling requests are transmitted on dedicated resources on the uplink control channel and dedicated resources need to be used with care as unused dedicated resources are an additional cost for the system. Although direct communications may be high priority communications they may not occur very often and thus, providing them with their own dedicated resources may not be ideal in all cases. The present invention has addressed these competing factors by providing the information regarding the type of communication within the transmission transmitting the status report. The status report is transmitted by the user equipment once it has received the resource grant from the network node in response to its scheduling request. Identifying the type of communication with the status report transmission allows the network node to be aware of the type of communication before it allocates resources for the communication itself.

Although providing the information in the status report appears at first sight to have a drawback of requiring the resource grant for transmission of the status report to be performed with some urgency, this resource grant is small compared to the grant of the resource for the uplink communication. Thus, by the time the resource is allocated for the uplink communication itself the network will have received the required information regarding the nature of the communication from the status report and can allocate the resource in an appropriate manner.

An aspect also provides a method performed at a user equipment of requesting uplink resource from a network node within a wireless communication network, for transmitting uplink data, said method comprising: generating a status report said status report providing an indication of an amount of said uplink data and whether said uplink data is to be transmitted as a cellular communication to at least one other user equipment transmitted via at least one network node or whether said uplink data is to be transmitted as a direct communication directly to at least one other user equipment; and in response to receiving from said network node a resource grant granting a resource to said user equipment for transmitting said status report, transmitting said status report within said granted resource.

In some embodiments, said status report is generated to have one of at least two different formats, said user equipment selecting said format in dependence upon whether said uplink data is to be transmitted as said cellular communication or as said direct communication.

Different messages within wireless communication standards such as LTE have different predetermined formats which enable them to be identified by the network node and decoded. Thus, one way of identifying a particular type of communication is to use a status report with a particular dedicated format for that type of communication. This may have the additional advantage, that as different types of communication may have different requirements in the amount of information they transmit in these status reports, it may be advantageous to provide them with different formats as this may be the most efficient way of transmitting the information.

In some embodiments, said scheduling request is generated in response to said user equipment detecting data in a transmission buffer and said status report comprises a buffer status report relating to said transmission buffer.

The scheduling request may be generated in response to the user equipment detecting uplink data to be transmitted. For example, this may be detected by detecting data arriving in a transmission buffer where data is stored prior to transmitting it. The status report may comprise a buffer status report which relates to the transmission buffer and in particular, the amount of data within the transmission buffer and the nature of the communication.

In some embodiments, following transmission of said scheduling request, when said uplink data is to be transmitted as said direct communication and a next scheduling request transmission opportunity arises before said resource grant has been received, re-transmitting said scheduling request at said next scheduling request opportunity.

A feature arising from the use of a single scheduling request for both types of communication, is that when allocating the resources for transmitting the status report, the network is unaware of what type of communication this is allocated for and therefore unaware of the priority of the communication. Direct communications are often used for public safety scenarios and therefore have a high priority. It may therefore be important that the resource for transmitting the status report is granted quickly. In some cases, the user equipment may repeatedly transmit scheduling requests where the scheduling request relates to uplink data for a direct communication and in this way it is likely that the resource will be granted with a higher priority. In this regard, transmission opportunities for scheduling requests may arise at certain points where the scheduling requests are for example transmitted on predetermined resources. For example, in some cases scheduling requests for particular user equipment are provided with dedicated timeslots on a particular channel. Each time one of these timeslots occurs, the scheduling request for a direct communication can be retransmitted if no resource grant has yet been received. In this way, the direct communications can be prioritised at the user equipment which is aware of the nature of the communication at this point, and the need for the network node to treat all requests with urgency is alleviated.

In some embodiments, when said uplink data is to be transmitted as said direct communication said status report comprises an indication of a priority of said direct communication.

In addition to, or as a way of, providing information as to whether the communication is a direct or cellular communication, the status report may comprise an indication of a priority of the communication and this may particularly be the case where the communication is a direct communication and it is important that where several direct communications are pending the direct communication with the highest priority is transmitted first. In this regard, direct communications in the public safety sector may be between groups of user equipment within different public safety groups, such as fire, police or the ambulance service. The priority of a particular group may change depending on the nature of the incident and thus, it may be advantageous to be able to dynamically indicate the priority with the status report.

In some embodiments, said transmitting of said scheduling request is a same transmitting step for both said cellular communication and said direct communication.

As noted previously, scheduling requests generally use dedicated resources and thus, having scheduling requests dedicated to each type of communication may be expensive in resources and thus, in some embodiments, a scheduling request is transmitted in the same way for both types of communication. In other embodiments, the scheduling request may itself provide an indication of the type of communication either by the resource on which it is transmitted or by the nature of the request itself. This has a resource overhead but allows the resource grant for the buffer status report to be prioritised for direct communications.

In some embodiments, said step of transmitting said scheduling request comprises transmitting said scheduling request on one of a plurality of predetermined resources reserved for transmitting scheduling requests for cellular communications, a subset of said predetermined resources being reserved for transmitting scheduling requests for either said direct communications or for said cellular communications, said user equipment selecting one of said predetermined resources to transmit said scheduling request in dependence upon whether said request is for said cellular or said direct communication.

As noted previously, dedicated resources for scheduling requests are expensive. Furthermore, although direct communications may have a high priority, they do not occur very often. In some embodiments, it has been found to be advantageous to provide a subset of the resources that are reserved for scheduling requests of cellular communication to be used for the scheduling requests of both cellular communication and direct communication. In this way, when a scheduling request is received on this subset of resources, the network node will understand that the resource grant should be given a high priority and should be sufficiently large to accommodate either a buffer status report pertaining to direct communication or one pertaining to cellular communication. In some embodiments, the resource grant may be sufficiently large to accommodate both status reports for situations where uplink data for both types of communication may be pending. The network node will be aware of what type of communication is actually pending when it receives the status reports which themselves carry this indication.

In some embodiments, the method comprises generating at least one further status report in response to said user equipment detecting further uplink data awaiting transmission in a separate communication; and in response to said resource grant being sufficient for transmitting said status report and at least one of said at least one further status reports, transmitting said status report and said at least one of said at least one further status reports within said granted resource.

In some embodiments, there may be several sets of uplink data awaiting transmission on separate communications and in which case the user equipment will generate status reports for each of these sets of these uplink data.

Scheduling requests will then need to be sent for each set of data and in response to a resource grant the status reports can be transmitted.

In this regard, where there are several uplink data pending and scheduling requests have been sent for each, then there maybe confusion as to which uplink data and corresponding status report a subsequent resource grant pertains. This potential problem may be addressed in different ways. For example a scheduling request may be sent and no further transmitted until a resource grant has been received for that status report. This of course introduces latency. Alternatively, a timer may be set and if no resource grant is received within the time period of the timer, then a subsequent scheduling request may be transmitted or the initial one retransmitted. In some cases, the network node may be configured to respond to the scheduling request within a predetermined time such that the user equipment should receive a resource grant during the time period of its timer,. In other cases, the network node may grant sufficient resource for transmitting more than one status report and in which case, the user equipment will transmit more than one status report and where there is not sufficient resource to transmit all the user equipment may prioritise which one(s) to transmit in dependence upon the type of communication they pertain to, any priority information they have associated with them and/or the time at which they were generated.

A second aspect of the present invention provides a method according to any preceding claim, comprising generating at least one further status report in response to said user equipment detecting further uplink data awaiting transmission in a separate communication; and
in response to said resource grant being sufficient for transmitting said status report and at least one of said at least one further status reports, transmitting said status report and said at least one of said at least one further status reports within said granted resource.

A third aspect of the present invention provides a user equipment comprising:
transmission logic for transmitting a scheduling request towards a network node within a wireless communication network;
status report generation logic operable to generate a status report providing an indication of an amount of uplink data awaiting transmission and whether said uplink data is to be transmitted as a cellular communication to at least one other user equipment transmitted via at least one network node or whether said uplink data is to be transmitted as a direct communication directly to at least one other user equipment wherein when said uplink data is to be transmitted as said direct communication said status report generation logic is configured to generate said status report to comprise an indication of a priority of said direct communication;
said transmission logic being responsive to receiving from said network node a resource grant granting a resource to said user equipment for transmitting said status report to transmit said status report within said granted resource.

As stated previously, where a network node is responsible for allocating resources for uplink transmissions from user equipment, in both cellular communications where the user equipment are communicating with other user equipment via the network nodes of a wireless communication network and in direct communications where the user equipment are communicating directly with each other, then it is important for the network node to know which type of communication it is allocating resources for, as these may need to be allocated with a different priority and/or from a different pool of resources and/or be of a different size. By providing an indication of the nature of the communication with the status report, the network node is able to determine the type of communication from this status report as well as the amount of uplink data and this allows it to allocate suitable resources for the communication.

An aspect also provides a method of allocating uplink resources performed at a network node comprising: transmitting a resource grant granting a resource to said user equipment for transmitting a status report; receiving said status report; and determining from said status report whether said status report corresponds to uplink data that is to be transmitted as a cellular communication to at least one other user equipment via at least one network node or to uplink data that is to be transmitted as a direct communication directly to at least one other user equipment; and allocating resources for transmission of said uplink data in dependence upon said determining step.

In one embodiment, said step of allocating comprises allocating resources from a pool of resources reserved for direct communication when said determining step determines said uplink data is to be transmitted as a direct communication and allocating resources from a pool of resources reserved for cellular communication when said determining step determines uplink data is to be transmitted as a cellular communication.

In some cases, the resources for direct communication may come from one pool while those for cellular communications come from another. In such a case, prior to allocating these resources the network node will need to know which communication it is allocating resources for.

In some embodiments, in response to said determining step determining said communication is a direct communication, said step of allocating resources is performed with a high priority.

Where the determining steps determines that the communication is a direct communication, then this may be a high priority communication as these direct communications are used by public safety users such as the emergency services and therefore, the network node will allocate the resources with a high priority.

In some embodiments, following receipt of said scheduling request, said transmitting step is performed with a high priority.

As noted previously, the status report itself provides the information regarding whether the communication is a direct communication or a cellular communication and direct communications should generally be allocated resources with a high priority. Thus, when a scheduling request is received at the network node, where it does not at this point know whether the scheduling request is for a cellular communication or a direct communication, then it will transmit the resource grant with a high priority such that where the communication is a direct communication, minimal delay is introduced.

In some embodiments, status reports related to cellular communication have a different format to status reports related to direct communication and the determining steps determines the difference between them in dependence upon their format.

A fourth aspect of the present invention provides a network node comprising:
receiving logic operable to receive scheduling requests from user equipment requiring uplink resources, and status reports form said user equipment indicating a quantity of said uplink data;
transmission logic operable to transmit a resource grant granting a resource to said user equipment for transmitting a status report in response to receipt of said scheduling requests;
determining logic operable to determine from said status report whether said status report corresponds to uplink data that is to be transmitted as a cellular communication to at least one other user equipment via at least one network node or to uplink data that is to be transmitted as a direct communication directly to at least one other user equipment, wherein when said uplink data is to be transmitted as said direct communication said status report comprises an indication of a priority of said direct communication; and
allocating logic operable to allocate resources for transmission of said uplink data in dependence upon said determining step.

A fifth aspect of the present invention provides a computer programme operable when executed by a computer to control said computer to perform steps in a method according to a first or third aspect of the present invention.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

### BRIEF DESCRIPTION OF THE DRAWINGS

Embodiments of the present invention will now be described further, with reference to the accompanying drawings, in which:
Figure 1 illustrates a plurality of user equipment and a cell of a wireless communication network;
Figure 2 illustrates the transmission of scheduling requests on dedicated time division multiplexed resources according to an embodiment;
Figure 3 illustrates the transmission of scheduling requests for cellular and direct communications on dedicated time division multiplexed resources according to an embodiment;
Figure 4 illustrates the transmission of scheduling requests for cellular and direct communications on dedicated frequency division multiplexed resources according to an embodiment;
Figure 5 illustrates the transmission of scheduling requests for cellular and direct communications on dedicated time division multiplexed resources, where the resources for direct communications are a subset of the cellular resources according to an embodiment;
Figure 6 illustrates one example a new buffer status report format for direction communications according to an embodiment;
Figure 7 illustrates a further example a new buffer status report format for direction communications according to a further embodiment; and
Figures 8a and 8b show conventional buffer status report formats.

### DESCRIPTION OF THE EMBODIMENTS

Before discussing the embodiments in any more detail, first an overview will be provided.

It maybe desirable on occasion to allow direct user equipment to user equipment communication. This communication may be between one user equipment and multiple user equipment within a group of which the user equipment is a member. Providing resources for such communications without an undue amount of collision is challenging. One form of direct user equipment to user equipment communication that is currently being standardized in 3GPP is ProSe or public safety communication. The public safety requirements require a public safety UE to support both ProSe and cellular communication at the same time. ProSe communication supports two mode, mode 1 which is used for in coverage ProSe communication and mode 2 is used for out of coverage ProSe communication. During the in coverage communication, the network (eNB) is in charge of the control of the ProSe communication where the eNB schedules the ProSe UEs providing scheduling grant for the ProSe communication. This is seen as floor control within a group of UEs where only one UE within the group will be transmitting the data at a time allowing for half duplex UE operation. The ProSe UE requests the scheduling grant from the eNB by transmitting a buffer status report BSR indicating the status of a transmission buffer, that is the quantity of uplink data to be transmitted in the communication.

The procedure followed is that when data is available for transmission, a scheduling request SR is triggered followed by a transmission of BSR to the eNB. This procedure of SR triggering and BSR transmission is also used in requesting the resource grant from the network in legacy cellular communication. Considering that the ProSe UE is required to support simultaneous ProSe and cellular communication, and the scheduling control is performed by the same eNB, following a similar procedure for both is efficient in resources, but may require some type of differentiating between the two communications when requesting resource.

In effect re-using legacy format and procedures as much as possible in order to minimize the specification impacts is desirable, however, the ProSe requirements of high priority transmissions need to be allowed for and interaction between the SR and/or BSR communication for ProSe and cellular communication should be minimised or at least reduced where possible.

A method for SR/BSR handling is proposed which takes into account the interaction between the ProSe and cellular communication and at the same time reduces the specification impacts.

The scheduling request procedure used in the current LTE standard is specified in TS 36.321 and the main concept is highlighted below.

Scheduling request (SR) transmission is triggered when data arrives at an uplink UL transmission buffer belonging to a radio bearer where SR masking is not enabled and there is no UL grant available for the transmission. The data arrival at the UL transmission buffer is defined either as arrival of data at the PDCP buffer or at the RLC buffer. The radio bearer is mapped to a logical channel (one to one mapping), therefore, the data arrival at PDCP and RLC buffer can be considered equivalent with regards to scheduling request trigger.

For the transmission of SR, dedicated scheduling request (D-SR) resources is configured by the network per UE. Only one D-SR configuration per UE is performed in the current standard.

After the resource is granted to the UE, the UE transmits the buffer status report (BSR) which includes the amount of data available for the transmission at the UE. After the transmission of BSR MAC CE (buffer status report, medium access control, control element), the triggered SR is cancelled at the UE.

Where a network is to manage the allocation of resources for both direct and cellular communications, it is important that the network is aware early in the procedure which type of communication resource is being requested as this may affect the priority of the allocation. In this regard public safety direct communications will need to be allocated resources with a high priority if the system is to provide the desired functionality. One possible approach in SR/BSR design for simultaneous ProSe and cellular communication is to follow single SR configuration to support both ProSe and cellular communication. SR configuration uses dedicated resources on PUCCH. Generally dedicated resources are used in the system with care as unused dedicated resources cost the system. Considering that ProSe incident may not be often and D-SR is only used to inform he network of the scheduling request, it seems beneficial to share the same D-SR resources between the ProSe and cellular communication.

In this process a SR is triggered whenever new data is arrived at the UE either for ProSe or cellular communication. The UE transmits the SR to the network. The network is not aware of whether the SR request is for ProSe communication or a cellular communication. Therefore, the network is required to grant scheduling resources as soon as possible to cater for urgent ProSe requirements. Generally, the network has flexibility on when to provide the scheduling grant upon the reception of SR, however with single SR approach, the grant should generally be provided as soon as possible, although in some embodiments this may be mitigated by the use of continual retransmission of scheduling requests by the user equipment when no resource grant has yet been received in the case of direct communications.

Upon the reception of the grant the UE transmits the BSR. Given that the network was not yet informed of whether the data is for ProSe or cellular communication, BSR should be enhanced to inform the type of data (ProSe or cellular) to the network. Different BSR format can be designed to carry this information. At minimum the type of data (whether ProSe or cellular) should be provided. Note that even though the same eNB schedules the both grant (Prose and cellular) the network uses separate resource pool for the allocation.

Not knowing whether the UE has sent SR for ProSe or cellular or both, the network should provide a grant that is large enough to transmit a combination of BSRs for Prose and cellular use.

In some embodiments if new data arrives when the ProSe triggered SR is in transits, another SR is not triggered. Similarly, when the BSR is sent, all pending SR may be cancelled.

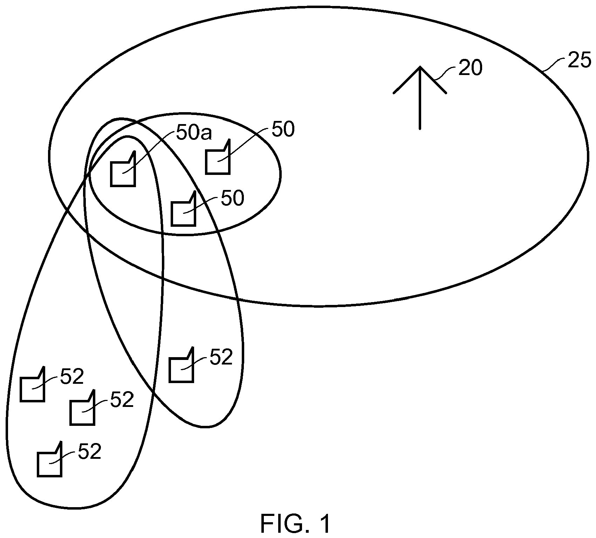

Figure 1 shows schematically a network node 20 supporting a radio cell 25 in which there are multiple user equipment 50. There are also user equipment 52 outside the coverage of the cell. The user equipment 50 are configured to perform cellular communications and direct communications with each other. In this embodiment, they are allocated to particular groups and can communicate with each other within these groups. In this regard, a communication within a group may have a particular priority depending on the circumstances and this priority may change. For the user equipment that are within radio cell 25, when they wish to perform direct communication, then they may do so using resources allocated under the control of network node 20.

In this regard, in order to be able to communicate with each other, they need to be allocated a resource on which to transmit a signal. Generally, direct communications between user equipment are performed on half duplex channels such that data is transmitted in one direction only. In order to avoid collision between user equipment, it is advantageous if the resource is allocated to a user equipment that wishes to form a direct communication and where this is under control of a network node, it can ensure that it does not allocate the same resource to other user equipment. Where the user equipment are out of network coverage, then they will need to allocate the resources in a different way. Generally, this is done from a pool of resources and the risk of collision is higher.

When a user equipment 50a within cell 25 has data in its uplink buffer for transmission to a group of user equipment of which it is a member, then in order to be able to do this, it transmits a scheduling request to network node 20 indicating that it requires resource for this communication.

In response to receipt of such a scheduling request, the network node will generate a scheduling grant which will allocate resources for transmission of a buffer status report indicating the amount of uplink data within the transmission buffer. As the network node is unaware at this point of the nature of the communication that the scheduling request is for it will treat all requests with a high priority and grant resource for transmission of the buffer status report.

In response to receipt of the resource grant the user equipment will transmit the buffer status report which indicates the status of the transmission buffer and in particular, an indication of the quantity of uplink data within it and the nature of the communication that it is to be transmitted as. In this regard the nature of the communication may be indicated by a flag within the status report or by the format that the status report has. Messages transmitted using standards such as LTE may have predetermined formats which identify the type of message and allow it to be decoded. Using a different format for BSRs of direct communications and cellular communications allow the two types of communication to be differentiated between in an efficient manner. Furthermore, it maybe advantageous to have different formats as the information transmitted maybe different. In direct communications for example, the buffer status report may indicate additional things such as the group of user equipment to which the communication is directed and the priority of this group. In this regard, the user equipment may be a member of several groups of user equipment and depending on circumstance, one or other may currently have the highest priority. In the public safety domain for example, the user equipment may communicate with user equipment belonging to the Police, user equipment belonging to the Fire Brigade and user equipment belonging to the ambulance service. Depending on the incident, it may in some cases be more important that the ambulance user equipment receive the information first, while in other circumstances, it may be more important that it goes to another one of the services.

Once the network node 20 has received the buffer status report it will allocate suitable resources for the communication. In this regard, where more than one scheduling request has been transmitted and no grant has yet been received then on receipt of a grant the user equipment may need to choose which BSR to transmit. There are several approaches to this, where the grant can accommodate all BSRs for pending transmissions then they will all be transmitted. Where the grant is not big enough to accommodate all BSRs, the UE will follow a prioritization of the BSRs. Prioritization of BSRs can be left to the UE implementation or specified or configured by the network.

In one prioritization method, the ProSe BSR is always prioritized over cellular BSR. In another method, the BSR corresponding to the first transmitted SR is prioritized over the other.

The triggered SR is cancelled when the corresponding BSR is transmitted to the network. In some cases, where a grant has not been received and another SR transmission opportunity arises, for example a dedicated resource becomes available, then the SR may be transmitted again its retransmission cancelling the previous SR.

It should be noted that although in the example provided above the scheduling request did not indicate the nature of the communication in some embodiments, it may do so, and although this has an overhead associated with it, it does have the advantage of the network node being able to provide resources for transmission of the buffer status report with a suitable priority and a suitable size.

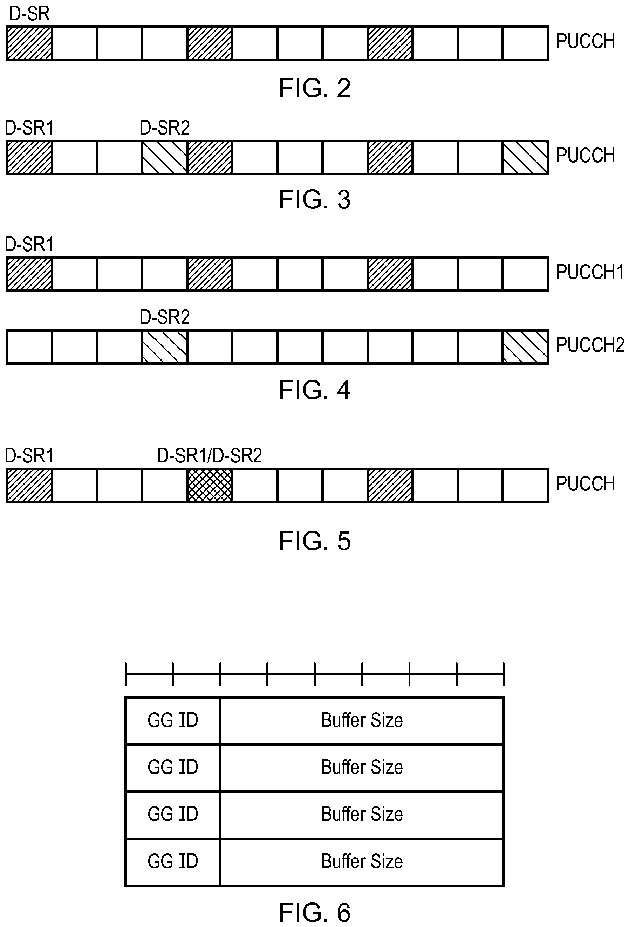

Figures 2 illustrates resources dedicated to a single scheduling request which simply indicates that data is awaiting transmission in the uplink buffer but not the nature of the communication, while Figures 3, 4 and 5 illustrate examples where the scheduling request provides some indication of the nature of the communication. Thus, if an SR as illustrated in Figure 2 is used, the network will be unaware of the nature of the communication until receipt of the BSR.

One example of independent SR configuration which indicates the nature of the communication is shown in Figure 3. In this case, both SR configurations indicating either cellular or direct communications are time multiplexed on the same PUCCH (physical uplilnk control channel). Thus the type of communication for which the resource is requested can be determined from the time location of the SR on the channel. The SR itself is simply a flag located at a particular time resource, the resource providing the indication of the nature of the communication

Alternatively, the SRs can be distinguished between using sub-carrier/frequency domain independent configuration, where SRs for Prose and cellular communications are configured on different PUCCHs as is shown in Figure 4, the SR being identified from the frequency channel it appears on. In both of these examples there are more dedicated resources provided to cellular communications which occur more often than there are to the direct or ProSe communications which are rarer but have a high priority.
Figure 5 shows the time division multiplexing of resources as in Figure 3 but here the resources for direct communications are a subset of those for cellular communications. In this way additional resources do not need to be dedicated to direct communications, and the network node is aware that a communication may be a direct communication if it receives a scheduling request on the resource which is the subset (D-SR1/ D-SR2). If it receives a resource in the set but not the subset S-SR1 then it knows that the scheduling request is for a direct communication.

Where the system uses scheduling requests as shown in Figures 2 or 5 then the network node may not know the nature of the communication until it receives the buffer status report. Where the scheduling requests such as those shown in Figures 3 and 4 are used then the network node will already know when allocating the resource for transmission of the BSR the nature of the communication and can prioritise the allocation accordingly.

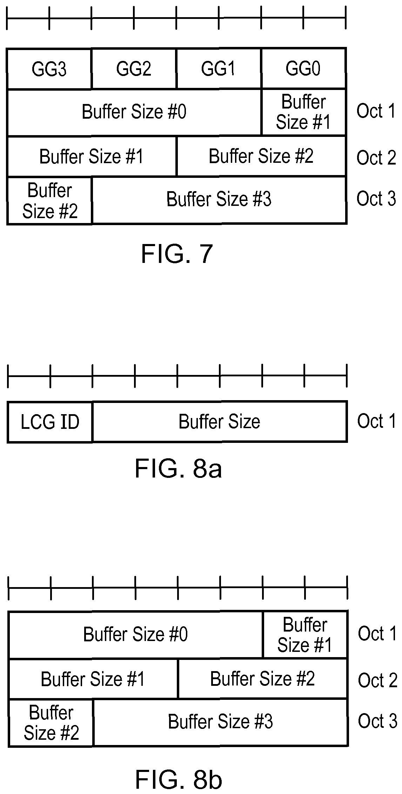

As noted previously BSRs may be distinguished by different formats. The legacy format currently used for transmitting BSRs for cellular communications may be used in some embodiments to indicate cellular communications, while a different format maybe used to indicate direct communications. Two examples of the new formats that may be used to indicate direct communications are shown in figures 6 and 7. Figures 6 and 7 show formats for BSRs for direct communication between user equipment within groups. The order that the group ID appears in the BSR indicates its priority, allowing the priority of the groups to be indicated in a dynamic way, such that the current priority of a group is signalled with the request for resource allocation. Conventional formats which may be used for cellular communications are shown in Figure 8 a and 8b. These are example formats and are not limiting, it would be clear to a skilled person that a number of different formats would be appropriate.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its scope as defined in the appended claims. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A method performed at a user equipment (50) of requesting uplink resource from a network node (20) within a wireless communication network, for transmitting uplink data, comprising:
transmitting a scheduling request;
generating a status report said status report providing an indication of an amount of said uplink data and whether said uplink data is to be transmitted as a cellular communication to at least one other user equipment transmitted via at least one network node or whether said uplink data is to be transmitted as a direct communication directly to at least one other user equipment;
in response to receiving from said network node (20) a resource grant granting a resource to said user equipment (50) for transmitting said status report, transmitting said status report within said granted resource; wherein
when said uplink data is to be transmitted as said direct communication said status report comprises an indication of a priority of said direct communication.

2. A method according to claim 1, wherein said status report is generated to have one of at least two different formats, said user equipment selecting said format in dependence upon whether said uplink data is to be transmitted as said cellular communication or as said direct communication.

3. A method according to any preceding claim, wherein said scheduling request is generated in response to said user equipment detecting data in a transmission buffer and said status report comprises a buffer status report relating to said transmission buffer.

4. A method according to any preceding claim, wherein following transmission of said scheduling request, when said uplink data is to be transmitted as said direct communication and a next scheduling request transmission opportunity arises before said resource grant has been received, re-transmitting said scheduling request at said next scheduling request opportunity.

5. A method according to any preceding claim, wherein said transmitting of said scheduling request is a same transmitting step for both said cellular communication and said direct communication.

6. A method according to any one of claims 1 to 4, wherein said step of transmitting said scheduling request comprises transmitting said scheduling request on one of a plurality of predetermined resources reserved for transmitting scheduling requests for cellular communications, a subset of said predetermined resources being reserved for transmitting scheduling requests for either said direct communications or for said cellular communications, said user equipment selecting one of said predetermined resources to transmit said scheduling request in dependence upon whether said request is for said cellular or said direct communication.

7. A method according to any preceding claim, comprising generating at least one further status report in response to said user equipment detecting further uplink data awaiting transmission in a separate communication; and
in response to said resource grant being sufficient for transmitting said status report and at least one of said at least one further status reports, transmitting said status report and said at least one of said at least one further status reports within said granted resource.

8. Auser equipment (50) comprising:
transmission logic for transmitting a scheduling request towards a network node within a wireless communication network;
status report generation logic operable to generate a status report providing an indication of an amount of uplink data awaiting transmission and whether said uplink data is to be transmitted as a cellular communication to at least one other user equipment transmitted via at least one network node or whether said uplink data is to be transmitted as a direct communication directly to at least one other user equipment wherein when said uplink data is to be transmitted as said direct communication said status report generation logic is configured to generate said status report to comprise an indication of a priority of said direct communication;
said transmission logic being responsive to receiving from said network node a resource grant granting a resource to said user equipment for transmitting said status report to transmit said status report within said granted resource.

9. A method of allocating uplink resources performed at a network node comprising:
receiving a scheduling request;
transmitting a resource grant granting a resource to said user equipment for transmitting a status report;
receiving said status report; and
determining from said status report whether said status report corresponds to uplink data that is to be transmitted as a cellular communication to at least one other user equipment via at least one network node or to uplink data that is to be transmitted as a direct communication directly to at least one other user equipment, wherein when said uplink data is to be transmitted as said direct communication said status report comprises an indication of a priority of said direct communication; and
allocating resources for transmission of said uplink data in dependence upon said determining step.

10. A method according to claim 9, wherein said step of allocating comprises allocating resources from a pool of resources reserved for direct communication when said determining step determines said uplink data is to be transmitted as a direct communication and allocating resources from a pool of resources reserved for cellular communication when said determining step determines uplink data is to be transmitted as a cellular communication.

11. A method according to claim 9 or 10, wherein following receipt of said scheduling request, said transmitting step is performed with a high priority.

12. A method according to any one of claims 9 to 11, wherein status reports related to cellular communication have a different format to status reports related to direct communication.

13. A network node (20) comprising:
receiving logic operable to receive scheduling requests from user equipment requiring uplink resources, and status reports from said user equipment indicating a
quantity of said uplink data;
transmission logic operable to transmit a resource grant granting a resource to said user equipment for transmitting a status report in response to receipt of said scheduling requests;
determining logic operable to determine from said status report whether said status report corresponds to uplink data that is to be transmitted as a cellular communication to at least one other user equipment via at least one network node or to uplink data that is to be transmitted as a direct communication directly to at least one other user equipment, wherein when said uplink data is to be transmitted as said direct communication said status report comprises an indication of a priority of said direct communication; and
allocating logic operable to allocate resources for transmission of said uplink data in dependence upon said determining step.

14. A computer program operable when executed by a computer to control said computer to perform steps in a method according to any one of claims 1 to 7 and 9 to 12.

## Patentansprüche

1. Verfahren, das bei einem Anwendergerät (50) ausgeführt wird, zum Anfordern eines Aufwärtsstreckenbetriebsmittels von einem Netzknoten (20) innerhalb eines drahtlosen Kommunikationsnetzes zum Senden von Aufwärtsstreckendaten, das Folgendes umfasst:
Senden einer Planungsanforderung;
Erzeugen eines Statusberichts, wobei der Statusbericht eine Angabe einer Menge der Aufwärtsstreckendaten liefert und ob die Aufwärtsstreckendaten als eine zellulare Kommunikation an mindestens ein anderes Anwendergerät, die über mindestens einen Netzknoten gesendet wird, zu senden sind oder ob die Aufwärtsstreckendaten als eine direkte Kommunikation unmittelbar an mindestens ein anderes Anwendergerät zu senden sind;
als Reaktion auf das Empfangen einer Betriebsmittelzuteilung, die dem Anwendergerät (50) ein Betriebsmittel zum Senden des Statusberichts zuteilt, von dem Netzknoten (20) Senden des Statusberichts innerhalb des zugeteilten Betriebsmittels; wobei
dann, wenn die Aufwärtsstreckendaten als die direkte Kommunikation zu senden sind, der Statusbericht eine Angabe einer Priorität der direkten Kommunikation umfasst.

2. Verfahren nach Anspruch 1, wobei der Statusbericht so erzeugt wird, dass er eines von mindestens zwei Formaten besitzt, wobei das Anwendergerät das Format in Abhängigkeit davon auswählt, ob die Aufwärtsstreckendaten als die zellulare Kommunikation oder als die direkte Kommunikation zu senden sind.

3. Verfahren nach einem vorhergehenden Anspruch, wobei die Planungsanforderung als Reaktion darauf, dass das Anwendergerät Daten in einem Übertragungszwischenspeicher detektiert, erzeugt wird und der Statusbericht einen Zwischenspeicherstatusbericht umfasst, der sich auf den Übertragungszwischenspeicher bezieht.

4. Verfahren nach einem vorhergehenden Anspruch, wobei im Anschluss an die Übertragung der Planungsanforderung dann, wenn die Aufwärtsstreckendaten als direkte Kommunikation zu senden sind und sich eine nächste Planungsanforderungsübertragungsgelegenheit bietet, bevor die Betriebsmittelzuteilung empfangen wird, die Planungsanforderung bei der nächsten Planungsanforderungsgelegenheit erneut gesendet wird.

5. Verfahren nach einem vorhergehenden Anspruch, wobei das Senden der Planungsanforderung derselbe Übertragungsschritt sowohl für die zellulare Kommunikation als auch für die direkte Kommunikation ist.

6. Verfahren nach einem der Ansprüche 1 bis 4, wobei der Schritt des Sendens der Planungsanforderung umfasst, die Planungsanforderung auf einem von mehreren vorbestimmten Betriebsmitteln zu senden, die zum Senden von Planungsanforderungen für zellulare Kommunikationen reserviert sind, wobei eine Untergruppe der vorbestimmten Betriebsmittel zum Senden von Planungsanforderungen entweder für die direkten Kommunikationen oder für die zellularen Kommunikationen reserviert sind, wobei das Anwendergerät eines der vorbestimmten Betriebsmittel, um die Planungsanforderung zu senden, in Abhängigkeit davon auswählt, ob die Anforderung für die zellulare oder die direkte Kommunikation ist.

7. Verfahren nach einem vorhergehenden Anspruch, das umfasst, mindestens einen weiteren Statusbericht als Reaktion darauf, dass das Anwendergerät weitere Aufwärtsstreckendaten detektiert, die auf eine Übertragung in einer getrennten Kommunikation warten, zu erzeugen; und
als Reaktion darauf, dass die Betriebsmittelzuteilung zum Senden des Statusberichts und mindestens eines des mindestens einen weiteren Statusberichts ausreichend ist, den Statusbericht und den mindestens einen des mindestens einen weiteren Statusberichts innerhalb des zugeteilten Betriebsmittels zu senden.

8. Anwendergerät (50), das Folgendes umfasst:
eine Übertragungslogik zum Senden einer Planungsanforderung in Richtung eines Netzknotens innerhalb eines drahtlosen Kommunikationsnetzes;
eine Statusberichterzeugungslogik, die betreibbar ist, einen Statusbericht zu erzeugen, der eine Angabe einer Menge von Aufwärtsstreckendaten, die auf eine Übertragung warten, und ob die Aufwärtsstreckendaten als eine zellulare Kommunikation an mindestens ein anderes Anwendergerät, die über mindestens einen Netzknoten gesendet wird, zu senden sind oder ob die Aufwärtsstreckendaten als eine direkte Kommunikation unmittelbar an mindestens ein anderes Anwendergerät zu senden sind, liefert, wobei dann, wenn die Aufwärtsstreckendaten als die direkte Kommunikation zu senden sind, die Statusberichterzeugungslogik konfiguriert ist, den Statusbericht so zu erzeugen, dass er eine Angabe einer Priorität der direkten Kommunikation umfasst;
wobei die Übertragungslogik als Reaktion auf das Empfangen einer Betriebsmittelzuteilung, die dem Anwendergerät ein Betriebsmittel zum Senden des Statusberichts zugeteilt, den Statusbericht innerhalb des zugeteilten Betriebsmittels sendet.

9. Verfahren zum Zuteilen von Aufwärtsstreckenbetriebsmitteln, das an einem Netzknoten ausgeführt wird und das Folgendes umfasst:
Empfangen einer Planungsanforderung;
Senden einer Betriebsmittelzuteilung, die dem Anwendergerät ein Betriebsmittel zum Senden eines Statusberichts zuteilt;
Empfangen des Statusberichts; und
Bestimmen aus dem Statusbericht, ob der Statusbericht Aufwärtsstreckendaten, die als eine zellulare Kommunikation an mindestens ein anderes Anwendergerät über mindestens einen Netzknoten zu senden sind, oder Aufwärtsstreckendaten, die als eine direkte Kommunikation unmittelbar an mindestens ein anderes Anwendergerät zu senden sind, entspricht, wobei dann, wenn die Aufwärtsstreckendaten als die direkte Kommunikation zu senden sind, der Statusbericht eine Angabe einer Priorität der direkten Kommunikation umfasst; und
Zuteilen von Betriebsmitteln für eine Übertragung der Aufwärtsstreckendaten in Abhängigkeit von dem Bestimmungsschritt.

10. Verfahren nach Anspruch 9, wobei der Schritt des Zuteilens umfasst, Betriebsmittel von einem Reservoir von Betriebsmitteln, die für eine direkte Kommunikation reserviert sind, zuzuteilen, wenn der Bestimmungsschritt bestimmt, dass die Aufwärtsstreckendaten als eine direkte Kommunikation zu senden sind, und Betriebsmittel von einem Reservoir von Betriebsmitteln, die für eine zellulare Kommunikation reserviert sind, zuzuteilen, wenn der Bestimmungsschritt bestimmt, dass die Aufwärtsstreckendaten als eine zellulare Kommunikation zu senden sind.

11. Verfahren nach Anspruch 9 oder 10, wobei im Anschluss an den Empfang der Planungsanforderung der Übertragungsschritt mit einer hohen Priorität ausgeführt wird.

12. Verfahren nach einem der Ansprüche 9 bis 11, wobei Statusberichte, die sich auf eine zellulare Kommunikation beziehen, ein anderes Format besitzen als Statusberichte, die sich auf eine direkte Kommunikation beziehen.

13. Netzknoten (20), der Folgendes umfasst:
eine Empfangslogik, die betreibbar ist, Planungsanforderungen von einem Anwendergerät, das Aufwärtsstreckenbetriebsmittel benötigt, und Statusberichte von dem Anwendergerät, die eine Qualität der Aufwärtsstreckendaten angeben, zu empfangen;
eine Übertragungslogik, die betreibbar ist, eine Betriebsmittelzuteilung, die dem Anwendergerät ein Betriebsmittel zum Senden eines Statusberichts als Reaktion auf den Empfang der Planungsanforderungen zuteilt, zu senden;
eine Bestimmungslogik, die betreibbar ist, aus dem Statusbericht zu bestimmen, ob der Statusbericht Aufwärtsstreckendaten, die als eine zellulare Kommunikation an mindestens ein anderes Anwendergerät über mindestens einen Netzknoten zu senden sind, oder Aufwärtsstreckendaten, die als eine direkte Kommunikation unmittelbar an mindestens ein anderes Anwendergerät zu senden sind, entspricht, wobei dann, wenn die Aufwärtsstreckendaten als die direkte Kommunikation zu senden sind, der Statusbericht eine Angabe einer Priorität der direkten Kommunikation umfasst; und
eine Zuteilungslogik, die betreibbar ist, Betriebsmittel für eine Übertragung der Aufwärtsstreckendaten in Abhängigkeit von dem Bestimmungsschritt zuzuteilen.

14. Computerprogramm, das betreibbar ist, dann, wenn es durch einen Computer ausgeführt wird, den Computer zu steuern, Schritte in einem Verfahren nach einem der Ansprüche 1 bis 7 und 9 bis 12 auszuführen.

## Revendications

1. Procédé réalisé au niveau d'un équipement utilisateur (50) pour demander des ressources de liaison montante à un nœud de réseau (20) dans un réseau de communication sans fil, afin de transmettre des données de liaison montante, comprenant :
la transmission d'une demande d'ordonnancement ;
la génération d'un rapport d'état, ledit rapport d'état fournissant une indication d'une quantité desdites données de liaison montante et que lesdites données de liaison montante doivent être transmises en tant que communication cellulaire à au moins un autre équipement utilisateur par l'intermédiaire d'au moins un nœud de réseau ou que lesdites données de liaison montante doivent être transmises en tant que communication directe directement à au moins un autre équipement utilisateur ;
en réponse à la réception depuis ledit nœud de réseau (20) d'un octroi de ressource qui octroie une ressource audit équipement utilisateur (50) pour transmettre ledit rapport d'état, la transmission dudit rapport d'état dans ladite ressource octroyée ; dans lequel
lorsque lesdites données de liaison montante doivent être transmises en tant que dite communication directe, ledit rapport d'état comprend une indication d'une priorité de ladite communication directe.

2. Procédé selon la revendication 1, dans lequel ledit rapport d'état est généré dans un d'au moins deux formats différents, ledit équipement utilisateur sélectionnant ledit format selon que lesdites données de liaison montante doivent être transmises en tant que dite communication cellulaire or en tant que dite communication directe.

3. Procédé selon n'importe quelle revendication précédente, dans lequel ladite demande d'ordonnancement est générée en réponse à la détection par ledit équipement utilisateur de données dans une mémoire tampon de transmission et ledit rapport d'état comprend un rapport d'état de mémoire tampon se rapportant à ladite mémoire tampon de transmission.

4. Procédé selon n'importe quelle revendication précédente, comprenant, après la transmission de ladite demande d'ordonnancement, lorsque lesdites données de liaison montante doivent être transmises en tant que dite communication directe et qu'une opportunité suivante de transmission de demande d'ordonnancement survient avant la réception dudit octroi de ressource, la retransmission de ladite demande d'ordonnancement lors de ladite opportunité suivante de demande d'ordonnancement.

5. Procédé selon n'importe quelle revendication précédente, dans lequel ladite transmission de ladite demande d'ordonnancement est une même étape de transmission pour à la fois ladite communication cellulaire et ladite communication directe.

6. Procédé selon l'une quelconque des revendications 1 à 4, dans lequel ladite étape de transmission de ladite demande d'ordonnancement comprend la transmission de ladite demande d'ordonnancement sur une d'une pluralité de ressources prédéterminées réservées pour la transmission de demandes d'ordonnancement de communications cellulaires, un sous-ensemble desdites ressources prédéterminées étant réservé pour transmettre des demandes d'ordonnancement pour soit lesdites communications directes, soit lesdites communications cellulaires, ledit équipement utilisateur sélectionnant une desdites ressources prédéterminées pour transmettre ladite demande d'ordonnancement selon que ladite demande porte sur ladite communication cellulaire ou ladite communication directe.

7. Procédé selon n'importe quelle revendication précédente, comprenant la génération d'au moins un rapport d'état supplémentaire en réponse à la détection par ledit équipement utilisateur de données de liaison montante supplémentaires attendant d'être transmises dans une communication séparée ; et
quand ledit octroi de ressource est suffisant pour transmettre ledit rapport d'état et en réponse à au moins un dudit au moins un rapport d'état supplémentaire, la transmission dudit rapport d'état et dudit au moins un rapport d'état supplémentaire dans ladite ressource accordée.

8. Equipement utilisateur (50) comprenant :
une logique de transmission pour transmettre une demande d'ordonnancement vers un nœud de réseau dans un réseau de communication sans fil ;
une logique de génération de rapport d'état exploitable pour générer un rapport d'état fournissant une indication d'une quantité de données de liaison montante attendant d'être transmises et que lesdites données de liaison montante doivent être transmises en tant que communication cellulaire à au moins un autre équipement utilisateur par l'intermédiaire d'au moins un nœud de réseau ou que lesdites données de liaison montante doivent être transmises en tant que communication directe directement à au moins un autre équipement utilisateur dans lequel lorsque lesdites données de liaison montante doivent être transmises en tant que dite communication directe ladite logique de génération de rapport d'état est configurée pour générer ledit rapport d'état avec une indication d'une priorité de ladite communication directe ;
ladite logique de transmission répondant à la réception depuis ledit nœud de réseau d'un octroi de ressource en octroyant une ressource audit équipement utilisateur pour transmettre ledit rapport d'état dans ladite ressource accordée.

9. Procédé d'attribution de ressources de liaison montante réalisé au niveau d'un nœud de réseau comprenant :
la réception d'une demande d'ordonnancement ;
la transmission d'un octroi de ressource octroyant une ressource audit équipement utilisateur pour transmettre un rapport d'état ;
la réception dudit rapport d'état ; et
la détermination à partir dudit rapport d'état que ledit rapport d'état correspond à des données de liaison montante qui doivent être transmises en tant que communication cellulaire à au moins un autre équipement utilisateur par l'intermédiaire d'au moins un nœud de réseau ou à des données de liaison montante qui doivent être transmises en tant que communication directe directement à au moins un autre équipement utilisateur, dans lequel lorsque lesdites données de liaison montante doivent être transmises en tant que dite communication directe ledit rapport d'état comprend une indication d'une priorité de ladite communication directe ; et
l'attribution de ressources pour la transmission desdites données de liaison montante en fonction de ladite étape de détermination.

10. Procédé selon la revendication 9, dans lequel ladite étape d'attribution comprend l'attribution de ressources à partir d'un bloc de ressources réservées pour la communication directe quand ladite étape de détermination détermine que lesdites données de liaison montante doivent être transmises en tant que communication directe et l'attribution de ressources depuis un bloc de ressources réservées pour la communication cellulaire quand ladite étape de détermination détermine que les données de liaison montante doivent être transmises en tant que communication cellulaire.

11. Procédé selon la revendication 9 ou 10, dans lequel après la réception de ladite demande d'ordonnancement, ladite étape de transmission est réalisée avec une haute priorité.

12. Procédé selon l'une quelconque des revendications 9 à 11, dans lequel des rapports d'état se rapportant aux communications cellulaires ont un format différent de celui des rapports d'état se rapportant aux communications directes.

13. Nœud de réseau (20) comprenant :
une logique de réception exploitable pour recevoir des demandes d'ordonnancement depuis des équipements utilisateurs nécessitant des ressources de liaison montante, et des rapports d'état depuis lesdits équipements utilisateurs indiquant une quantité desdites données de liaison montante ;
une logique de transmission exploitable pour transmettre un octroi de ressource audit équipement utilisateur pour transmettre un rapport d'état en réponse à la réception desdites demandes d'ordonnancement ;
une logique de détermination exploitable pour déterminer à partir dudit rapport d'état que ledit rapport d'état correspond à des données de liaison montante qui doivent être transmises en tant que communication cellulaire à au moins un autre équipement utilisateur par l'intermédiaire d'au moins un nœud de réseau ou à des données de liaison montante qui doivent être transmises en tant que communication directe directement à au moins un autre équipement utilisateur, dans lequel lorsque lesdites données de liaison montante doivent être transmises en tant que dite communication directe ledit rapport d'état comprend une indication d'une priorité de ladite communication directe ; et
une logique d'attribution exploitable pour attribuer des ressources pour la transmission desdites données de liaison montante en fonction de ladite étape de détermination.

14. Programme informatique exploitable, à son exécution par un ordinateur, pour commander audit ordinateur de mettre en œuvre des étapes dans un procédé selon l'une quelconque des revendications 1 à 7 et 9 à 12.
